# EUROPEAN PATENT APPLICATION

(11) **EP 4 693 642 A1**
(43) Date of publication of application: **11.02.2026**
(21) Application number: 24780927.0
(22) Date of filing: 29.03.2024
(51) Int. Cl.: H01M 50/184, H01G 2/10, H01G 9/08, H01G 11/78, H01M 10/04, H01M 10/0585, H01M 50/105, H01M 50/148, H01M 50/15, H01M 50/171, H01M 50/186, H01M 50/191, H01M 50/193, H01M 50/195

(54) **POWER STORAGE DEVICE AND METHOD FOR MANUFACTURING SAME**

(30) Priority: 29.03.2023 JP 2023054426; 28.06.2023 JP 2023106539
(71) Applicant: Dai Nippon Printing Co., Ltd., Tokyo 162-8001 (JP)
(72) Inventor: MIYASHIRO, Kae, Tokyo 162-8001 (JP); URIU, Toshibumi, Tokyo 162-8001 (JP); KANAZAWA, Sayako, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/013388
(87) International publication number: WO 2024/204835

(57) **Abstract**

This power storage device is provided with an electrode body, an exterior film, a seal part, and a seal reinforcement part. The exterior film wraps the electrode body so as to form an opening and has a first seal region. A lid body is disposed in the opening and has a second seal region facing the first seal region. The seal part is formed between the first seal region and the second seal region, and at least partially seals a portion between the first seal region and the second seal region. The seal reinforcement part reinforces sealing by the seal part.

## Description

### Technical Field

The present invention relates to an electrical storage device and a method for manufacturing the same.

### Background Art

PTL 1 discloses an all-solid-state battery as an example of an electrical storage device. The all-solid-state battery includes an electrode assembly, an electrode terminal, and an outer packaging that seals the electrode assembly. The outer packaging includes an outer package film wound around the electrode assembly so as to have an opening part, and a lid disposed at the opening part. One end part of the electrode terminal is electrically connected to the electrode assembly. The other end part of the electrode terminal is exposed to the outside of the lid. The electrode terminal penetrates through the lid. A lateral portion of the lid and the outer package film are attached via a sealant layer formed thereon or an adhesive agent layer.

### Citation List

### Patent Literature

PTL 1: Japanese Patent Laid-open Publication No. 2019-153504

### Summary of Invention

### Technical Problem

In the electrical storage device as in PTL 1, the dimensions of the lateral portion of the lid and the dimensions of the outer package film facing the lateral portion of the lid preferably coincide with each other from the viewpoint of reliably establishing sealing between the lid and the outer package film. However, there may be a difference in dimensions therebetween in practice, which may lead to a sealing failure between the lid and the outer package film. PTL 1 does not take this point into consideration.

An object of the present invention is to provide an electrical storage device with improved sealability between a lid and an outer package film.

### Solution to Problem

An electrical storage device according to a first aspect of the present invention includes an electrode assembly, an outer package film, a lid, a sealing portion, and a sealing reinforcement part. The outer package film wraps the electrode assembly to form an opening part and includes a first sealing region. The lid is disposed at the opening part and includes a second sealing region facing the first sealing region. The sealing portion is formed between the first sealing region and the second sealing region and establishes at least partial sealing between the first sealing region and the second sealing region. The sealing reinforcement part reinforces the sealing established by the sealing portion.

An electrical storage device according to a second aspect of the present invention is the electrical storage device according to the first aspect, in which a material forming the sealing reinforcement part includes at least one of a resin, a metal, a ceramic, a rubber, a mixture of at least two of these, and a composite of at least two of these.

An electrical storage device according to a third aspect of the present invention is the electrical storage device according to the first aspect or the second aspect, in which the sealing reinforcement part is formed at a part between the first sealing region and the second sealing region where at least the sealing portion is not formed.

An electrical storage device according to a fourth aspect of the present invention is the electrical storage device according to any one of the first to third aspects, in which the lid has a polygonal shape having vertexes in front view, and the sealing reinforcement parts are formed to at least partially cover at least one of the vertexes of the polygonal shape of the lid from outside.

An electrical storage device according to a fifth aspect of the present invention is the electrical storage device according to any one of the first to fourth aspects, in which the sealing reinforcement part covers at least a part of the first sealing region and at least a part of the second sealing region from outside of the outer package film and the lid.

An electrical storage device according to a sixth aspect of the present invention is the electrical storage device according to any one of the first to fifth aspects, in which the electrode assembly has a three-dimensional shape including a plurality of corners, and the sealing reinforcement part covers at least one of the plurality of corners from outside of the outer package film.

An electrical storage device according to a seventh aspect of the present invention is the electrical storage device according to any one of the first to sixth aspects, in which the electrode assembly has a three-dimensional shape including two mutually intersecting surfaces and a ridge line portion formed by the two surfaces, and the sealing reinforcement part covers the ridge line portion from the outside of the outer package film.

A method for manufacturing an electrical storage device according to an eighth aspect of the present invention includes: preparing an electrode assembly; wrapping the electrode assembly by an outer package film including a first sealing region to form an opening part; disposing a lid including a second sealing region at the opening part such that the second sealing region faces the first sealing region; forming a sealing portion between the first sealing region of the outer package film and the second sealing region of the lid, the sealing portion establishing at least partial sealing between the first sealing region and the second sealing region; and forming a sealing reinforcement part at a part between the first sealing region and the second sealing region where at least the sealing portion is not formed, the sealing reinforcement part reinforcing the sealing portion.

A method for manufacturing an electrical storage device according to a ninth aspect of the present invention includes: preparing an electrode assembly; wrapping the electrode assembly by an outer package film including a first sealing region to form an opening part; disposing a lid including a second sealing region at the opening part such that the second sealing region faces the first sealing region; forming a sealing portion between the first sealing region of the outer package film and the second sealing region of the lid, the sealing portion establishing at least partial sealing between the first sealing region and the second sealing region; impregnating at least a part of the first sealing region and at least a part of the second sealing region with a material in a fluid state; and solidifying the material in the fluid state to thereby form a sealing reinforcement part that reinforces the sealing portion.

A method for manufacturing an electrical storage device according to a tenth aspect of the present invention includes: preparing an electrode assembly; wrapping the electrode assembly by an outer package film including a first sealing region to form an opening part; disposing a lid including a second sealing region at the opening part such that the second sealing region faces the first sealing region; forming a sealing portion between the first sealing region of the outer package film and the second sealing region of the lid, the sealing portion establishing at least partial sealing between the first sealing region and the second sealing region; preparing a reinforcement member that is configured to be attachable to the lid and covers at least a part of the first sealing region and at least a part of the second sealing region from outside of the lid; and attaching the reinforcement member to the lid to thereby form a sealing reinforcement part that reinforces the sealing portion.

### Advantageous Effects of Invention

According to the present invention, an electrical storage device with improved sealability between a lid and an outer package film is provided.

### Brief Description of Drawings

[Fig. 1] Fig. 1 is a perspective view of an electrical storage device according to a first embodiment.
[Fig. 2] Fig. 2 is a perspective view of an electrode assembly in Fig. 1.
[Fig. 3] Fig. 3 is a sectional view illustrating a layer configuration of an outer package film included in the electrical storage device in Fig. 1.
[Fig. 4] Fig. 4 is a perspective view illustrating a schematic configuration of an end part of the outer package film.
[Fig. 5] Fig. 5 is a perspective view illustrating a schematic configuration of a lid.
[Fig. 6] Fig. 6 is a front view illustrating a schematic configuration of a periphery of the lid.
[Fig. 7A] Fig. 7A is a flowchart illustrating a method for manufacturing an electrical storage device according to a first embodiment.
[Fig. 7B] Fig. 7B is a perspective view of a lid unit.
[Fig. 8] Fig. 8 is a perspective view illustrating a schematic configuration of a periphery of a lid of an electrical storage device according to a second embodiment.
[Fig. 9] Fig. 9 is a diagram for explaining a method for forming a sealing reinforcement part according to the second embodiment.
[Fig. 10] Fig. 10 is a perspective view illustrating a schematic configuration of a periphery of a lid of an electrical storage device according to a third embodiment.
[Fig. 11] Fig. 11 is a perspective view illustrating a schematic configuration of an electrical storage device according to a fourth embodiment.
[Fig. 12] Fig. 12 is a perspective view illustrating a schematic configuration of an electrical storage device according to a modification.
[Fig. 13] Fig. 13 is a diagram illustrating an example of a state where an electrical storage device is used.

### Description of Embodiments

Hereinafter, an electrical storage device according to an embodiment of the present invention will be described with reference to the drawings. Note that in the drawings, like or equivalent parts are denoted by like symbols, and the descriptions thereof are not repeated. Further, the drawings do not necessarily reflect the actual dimensions of each member. Note that in the present embodiments, a numerical range indicated by the term "A to B" means "A or more" and "B or less". For example, the expression of "2 to 15 mm" means 2 mm or more and 15 mm or less. In numerical ranges serially described in the present embodiment, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range.

### [1. First embodiment]

### <1-1. Configuration of electrical storage device>

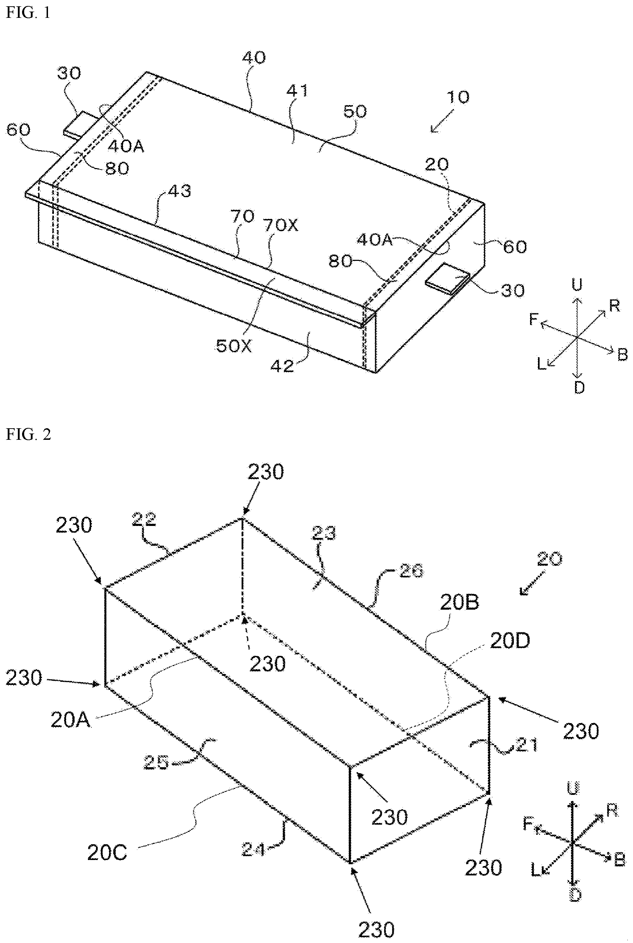

Fig. 1 is a perspective view schematically illustrating an electrical storage device 10 of a first embodiment. The electrical storage device 10 includes an electrode assembly 20, a pair of electrode terminals 30, and an outer packaging 40. In Fig. 1, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The directions indicated by the arrows UD, LR, and FB are also shared with the subsequent drawings.

### [Electrode assembly]

Fig. 2 is a side view schematically illustrating a configuration of the electrode assembly 20. Examples of the electrode assembly 20 include a lithium ion battery, a capacitor, or an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or electrodes (positive electrodes and negative electrodes) forming an electrical storage member such as a capacitor, a separator, and the like. In the present embodiment, the electrode assembly 20 has a substantially cuboid shape. Note that the "substantially cuboid" includes a perfect cuboid and also a solid that can be seen as a cuboid by modifying the shape of a part of the outer surface thereof, for example. However, the electrode assembly 20 may have, for example, a three-dimensional shape including a plurality of corners such as a substantially polygonal column, or may have a substantially cylindrical shape.

As illustrated in Fig. 2, the electrode assembly 20 has a front surface 21, a back surface 22, an upper surface 23, a lower surface 24, a first side surface 25, and a second side surface 26 in the present embodiment. However, the front surface 21, the back surface 22, the first side surface 25, and the second side surface 26 are virtual surfaces when the electrode assembly 20 is regarded as a substantially cuboid shape. The front surface 21 faces one of the lids 60. The back surface 22 faces the other lid 60. The upper surface 23 constitutes one of first surfaces 41 of the outer packaging 40, which will be described later. The lower surface 24 constitutes the other one of the pair of first surfaces 41 of the outer packaging 40, which will be described later. The first side surface 25 constitutes one of a pair of second surfaces 42 of the outer packaging 40, which will be described later. The second side surface 26 constitutes the other one of the pair of second surfaces 42 of the outer packaging 40, which will be described later. The electrode assembly 20 includes a ridge line portion 20A, a ridge line portion 20B, a ridge line portion 20C, and a ridge line portion 20D. The ridge line portion 20A is formed at the boundary between the upper surface 23 and the first side surface 25. The ridge line portion 20B is formed at the boundary between the upper surface 23 and the second side surface 26. The ridge line portion 20C is formed at the boundary between the first side surface 25 and the lower surface 24. The ridge line portion 20D is formed at the boundary between the second side surface 26 and the lower surface 24. In other words, it is assumed that each ridge line portion is a boundary of two mutually intersecting surfaces. An end part of each of the ridge line portions 20A to 20D serves as a corner 230 corresponding to a vertex of the substantially cuboid shape.

### [Outer packaging]

The outer packaging 40 seals the electrode assembly 20. The outer packaging 40 includes the outer package film 50 and the pair of lids 60. The outer package film 50 wraps the electrode assembly 20 such that a pair of opening parts 40A are formed. In the present embodiment, the outer package film 50 is wound around the electrode assembly 20 such that the pair of opening parts 40A are formed. The outer package film 50 includes a bulging portion 50X bulging further outward than a part wrapping the electrode assembly 20 in the state where it wraps the electrode assembly 20. The pair of lids 60 are disposed on the lateral sides of the electrode assembly 20, respectively, to close the pair of opening parts 40A.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20 in the present embodiment, the electrode assembly 20 can be easily sealed regardless of the thickness of the electrode assembly 20. In order to reduce a dead space between the electrode assembly 20 and the outer package film 50 to thereby improve the volume energy density of the electrical storage device 10, and also in order to improve cooling efficiency, a state where the outer package film 50 is in contact with and is wound around the outer surface of the electrode assembly 20 is preferable. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

### [Outer package film]

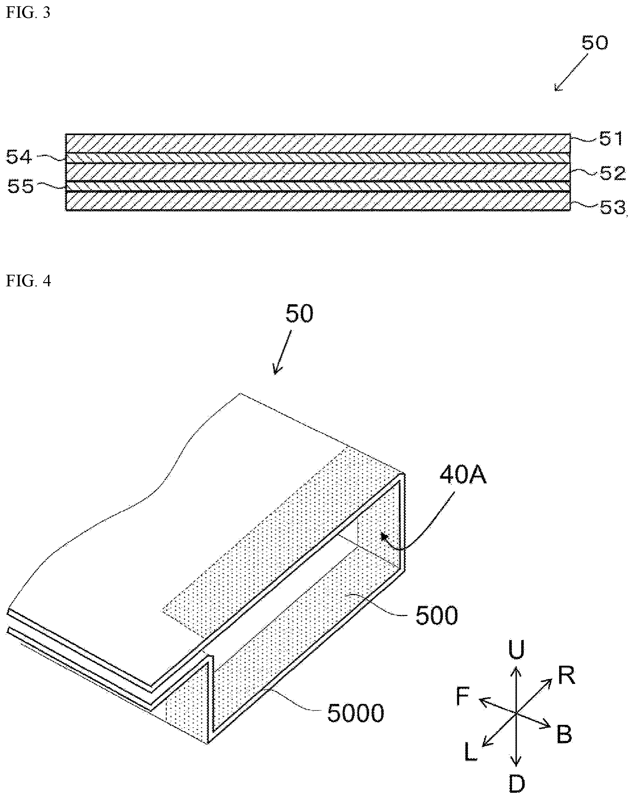

Fig. 3 is a sectional view illustrating a layer configuration of the outer package film 50. As illustrated in Fig. 3, the outer package film 50 is, for example, a laminate (laminated film) including a base material layer 51, a barrier layer 52 and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film. Note that the outer package film 50 is preferably heat-sealable.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Furthermore, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 20 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 mass% to 9.0 mass%, more preferably 0.5 mass% to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed of austenitic stainless steel.

Specific examples of the austenite-based stainless steel constituting the stainless steel foil include SUS304, SUS301, SUS316L, and of these, SUS304 is especially preferable.

In a case where the barrier layer 52 is a metal foil, the barrier layer 52 may perform a function as a barrier layer suppressing at least ingress of moisture, and has a thickness of, for example, about 5 µm to 200 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 µm to 85 µm, about 9.0 µm to 50 µm, about 9.0 µm to 40 µm, about 9.0 µm to 35 µm, about 20 µm to 85 µm, about 20 µm to 50 µm, about 20 µm to 40 µm, about 20 µm to 35 µm, about 25 µm to 85 µm, about 25 µm to 50 µm, about 25 µm to 40 µm, or about 25 µm to 35 µm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 µm to 200 µm, about 35 µm to 85 µm, about 35 µm to 75 µm, about 35 µm to 70 µm, about 45 µm to 200 µm, about 45 µm to 85 µm, about 45 µm to 75 µm, about 45 µm to 70 µm, about 50 µm to 200 µm, about 50 µm to 85 µm, about 50 µm to 75 µm, about 50 µm to 70 µm, about 55 µm to 200 µm, about 55 µm to 85 µm, about 55 µm to 75 µm, or about 55 µm to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. **In** particular, in a case where the barrier layer 52 is made of a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

When the barrier layer 52 is a metal foil, it is preferable that a corrosion-resistant film be provided at least on a surface on a side opposite to the base material layer 51 for preventing dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (for example, an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 µm, more preferably 200 µm, or still more preferably 1,000 µm. In a case where the buffer layer is made from a nonwoven fabric, the upper limit of the thickness of the buffer layer is preferably 5,000 µm, or more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm among these.

In a case where the buffer layer is made from rubber, the lower limit of the thickness of the buffer layer is preferably 0.5 mm. In a case where the buffer layer is made from rubber, the upper limit of the thickness of the buffer layer is preferably 10 mm, more preferably 5 mm, still more preferably 2 mm. In a case where the buffer layer is made from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

In the present embodiment, mutually facing surfaces (heat-sealable resin layer 53) of the outer package film 50 are heat-sealed in a state where the outer package film 50 is wound around the electrode assembly 20 and the lids 60 to thereby form a first seal portion 70. In the present embodiment, the first seal portion 70 extends in a longitudinal direction (FB direction) of the outer packaging 40. In the outer packaging 40, the position at which the first seal portion 70 is formed can be arbitrarily selected. In the present embodiment, a root 70X of the first seal portion 70 is located on a side 43 of a boundary between the first surface 41 and the second surface 42 of the outer packaging 40. The first surface 41 has a larger area than the second surface 42. The root 70X of the first seal portion 70 may be located on an arbitrary surface of the outer packaging 40. In the present embodiment, for example, the first seal portion 70 is folded toward the second surface 42 of the outer packaging 40. The first seal portion 70 may bulge further outward than the electrode assembly 20 in plan view, or may be folded toward the first surface 41.

Fig. 4 is a perspective view illustrating a schematic configuration of an end part of the outer package film 50 in the FB direction. As illustrated in Fig. 4, the outer package film 50 includes a first sealing region 500. The first sealing region 500 is a virtual region that is present at a peripheral edge portion of each opening part 40A, and a heat-sealable resin located in the first sealing region 500 is heat-sealed with a lid sealing portion 63 of the lid 60, which will be described later, to thereby form a second seal portion 80. Preferably, the first sealing region 500 includes a peripheral edge part 5000 that defines the peripheral edge of the opening part 40A. The second seal portion 80 is an example of the sealing portion of the present invention. Note that although Fig. 4 illustrates only the end part of the outer package film 50 on one side in the FB direction, the first sealing region 500 is similarly provided at the end part of the outer package film 50 on the other side in the FB direction as well.

### [Lid]

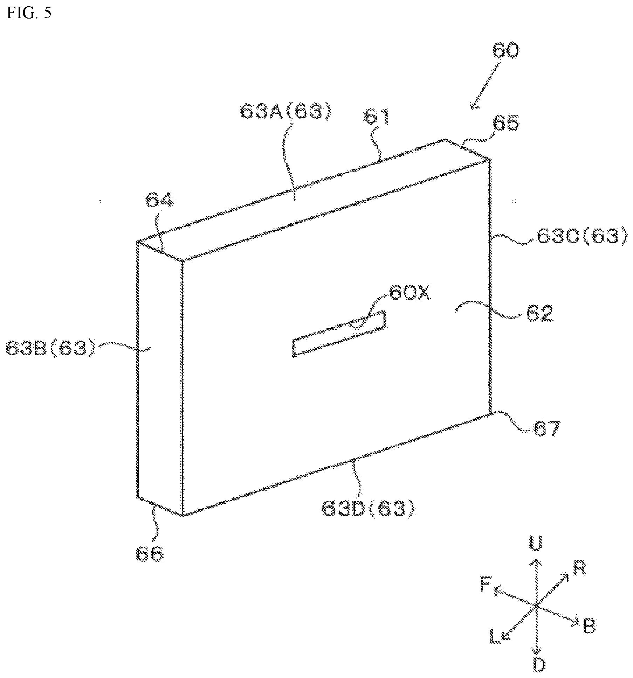

Fig. 5 is a perspective view illustrating a schematic configuration of the lid 60. The lid 60 is a member disposed to close each opening part 40A and has a plate shape with a polygonal shape when seen in the FB direction of the electrical storage device 10, for example. The lid 60 is made of, for example, a resin. The lid 60 may be formed by, for example, cold-molding the outer package film 50. Alternatively, the lid 60 may be a metal molded article. Furthermore, the material constituting the lid 60 may include at least one or more kinds of materials from among metal, metal oxide, carbon fiber reinforced plastic, and rubber.

The lid 60 includes a first surface 61, a second surface 62, and a lid sealing portion 63. The first surface 61 faces the electrode assembly 20. The second surface 62 is a surface on a side opposite to the first surface 61. The lid sealing portion 63 is connected to the first surface 61 and the second surface 62 and is heat-sealed to the heat-sealable resin layer 53 of the outer package film 50 to thereby form a second seal portion 80. In other words, the lid sealing portion 63 is an example of the second sealing region of the present invention.

The lid sealing portion 63 includes a first sealing surface 63A, a second sealing surface 63B, a third sealing surface 63C, and a fourth sealing surface 63D. The first sealing surface 63A forms the upper surface of the lid 60. The first sealing surface 63A extends in a first direction (LR direction in the present embodiment) in front view of the lid 60. The second sealing surface 63B and the third sealing surface 63C are connected to the first sealing surface 63A and form side surfaces of the lid 60. The second sealing surface 63B and the third sealing surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth sealing surface 63D forms the lower surface of the lid 60. The fourth sealing surface 63D extends in a first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on top of another. From another viewpoint, in the case where the lid 60 has a plate shape, the lid sealing portion 63 of the lid 60 is thick to some extent such that the lid sealing portion 63 of the lid and the outer package film 50 can be suitably heat-sealed when the second seal portion 80 is formed. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 12 mm. The thickness of the material constituting the lid 60 is preferably in the range of 1.0 mm to 20 mm, 1.0 mm to 15 mm, 1.0 mm to 12 mm, 3.0 mm to 20 mm, 3.0 mm to 15 mm, 3.0 mm to 12 mm, 4.0 mm to 20 mm, 4.0 mm to 15 mm, or 4.0 mm to 12 mm. In the present embodiment, in the case where the lid 60 is described as having a plate shape, an aspect in which the lid 60 is made only of the film specified by Japanese Industrial Standard (JIS), [Packaging Terminology] Standard is not included. Note that the thickness of the lid 60 may vary depending on a portion of the lid 60. In a case where the thickness of the lid 60 varies depending on a portion, the thickness of the thickest portion of the lid 60 is defined as a thickness of the lid 60.

The lid sealing portion 63 further includes boundaries 64, 65, 66 and 67. The boundary 64 is a boundary between the first sealing surface 63A and the second sealing surface 63B. The boundary 65 is a boundary between the first sealing surface 63A and the third sealing surface 63C. The boundary 66 is a boundary between the fourth sealing surface 63D and the second sealing surface 63B. The boundary 67 is a boundary between the fourth sealing surface 63D and the third sealing surface 63C. In other words, the boundaries 64 to 67 constitute vertexes of the lid 60. The shapes of the boundaries 64 to 67 may be angular, or may be rounded off by round chamfering. In the present embodiment, the boundaries 64 to 67 are angular.

From the viewpoint of suitably heat-sealing the lid 60 and the outer package film 50, the main components of materials constituting the lid 60 and materials constituting the heat-sealable resin layer 53 of the outer package film 50 are preferably the same. In the present embodiment, polypropylene is a main component of materials constituting the lid 60 and materials constituting the heat-sealable resin layer 53. In other words, the second seal portion 80 according to the present embodiment is formed from polypropylene as a main component. Note that the main component means a material that occupies 50% by mass or more, preferably 80% by mass or more, more preferably 90% by mass or more, and yet more preferably 95% or more when content of all the materials contained in the component is regarded as 100% by mass, for example.

In the present embodiment, a through-hole 60X into which the electrode terminal 30 as will be described later is inserted is formed in the lid 60. The through-hole 60X penetrates through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, a resin. Note that in the electrical storage device 10, the position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. Although the lid 60 and the electrode terminal 30 are provided separately in the electrical storage device 10, the lid 60 and the electrode terminal 30 may be integrally formed. Note that in a case where the electrode terminal 30 does not protrude from the end edge of the outer packaging 40, the through-hole 60X is not required to be formed in the lid 60.

### [Electrode terminal]

Referring again to Fig. 1, the electrical storage device 10 according to the present embodiment includes the pair of electrode terminals 30. The electrode terminals 30 are metal terminals for use in input and output of electrical power in the electrode assembly 20. One end part of each electrode terminal 30 is electrically connected to an electrode assembly (a positive electrode or a negative electrode). The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where lids 60 described later are made from, for example, metal, the lids 60 may also function as the electrode terminal 30, and in this case, the lids 60 having a function as an electrode terminal may, but are not required to, protrude from the outer packaging 40.

The metal material for forming the electrode terminal 30 is, for example, aluminum, nickel, copper or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel or the like.

### [Sealing reinforcement part]

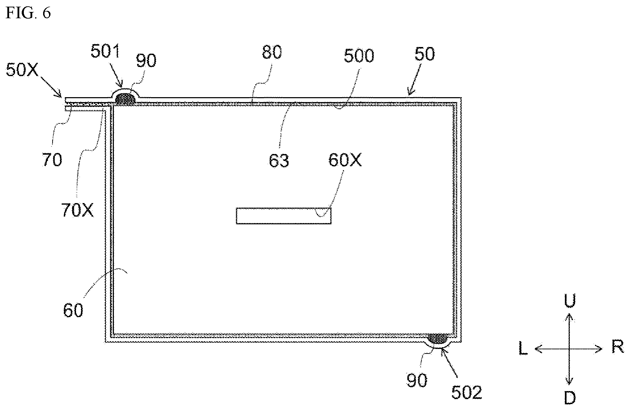

Fig. 6 is a front view illustrating a configuration of a periphery of each lid 60. As illustrated in Fig. 6, the electrical storage device 10 further includes one or more sealing reinforcement parts 90. The sealing reinforcement parts 90 are parts that reinforce sealing obtained by the second seal portion 80. In the example illustrated in Fig. 6, each sealing reinforcement part 90 is formed at a part between the first sealing region 500 of the outer package film 50 and the lid sealing portion 63 (second sealing region) of the lid 60, where at least the second seal portion 80 is not formed. The part where the second seal portion 80 is not formed may be present at one location or two or more locations.

The second seal portion 80 is formed in a state where the lid sealing portion 63 and the first sealing region 500 are caused to face each other and the entire lid sealing portion 63 is wrapped by the outer package film 50. At this time, the length of the outer package film 50 wrapping the lid sealing portion 63 may not coincide with the length of the lid sealing portion 63 (that is, the length of the lid 60 in the circumferential direction) and loosened part of the outer package film 50 may occur. The loosened part corresponds to parts denoted by the reference signs 501 and 502 in the example in Fig. 6. Note that although the sizes of the loosened parts 501 and 502 are emphasized in Fig. 6 for convenience of explanation, the loosened parts 501 and 502 may not protrude with respect to the surface of the outer package film 50 forming the second seal portion 80. At the loosened parts 501 and 502 of the outer package film 50, the heat-sealable resin of the lid sealing portion 63 and the heat-sealable resin of the first sealing region 500 do not come into sufficient contact with each other, and an unsealed portion where the second seal portion 80 is not formed is likely to occur. If such an unsealed portion is present, there is a concern that an electrolytic solution may leak out of the outer packaging 40 in a case where the electrode assembly 20 contains the electrolytic solution, or at least either gas or moisture may enter the inside of the outer packaging 40, which may adversely affect performance of the electrical storage device 10. The sealing reinforcement part 90 compensates for the unsealed portion, which may degrade the performance of the electrical storage device 10, and improves sealability between the lid 60 and the outer package film 50. Note that the unsealed portion is not necessarily limited to one caused by loosening of the outer package film 50 and may be one caused for another reason or may be one intentionally formed for a reason of convenience in manufacturing, for example.

Note that in the example in Fig. 6, two sealing reinforcement parts 90 are formed to fill in the part between the lid sealing portion 63 and the first sealing region 500 at the loosened parts 501 and 502. The sealing reinforcement part 90 formed at the loosened part 501 more effectively improves sealability between the lid 60 and the outer package film 50 as compared with the sealing reinforcement part 90 formed at the loosened part 502. The loosened part 501 is located to be closer to the bulging portion 50X (first seal portion 70). Since the bulging portion 50X is movable with respect to the root 70X of the first seal portion 70, a larger load is imparted to the second seal portion 80 as compared with the other parts near the root 70X. In other words, it is highly necessary to reinforce sealing by the second seal portion 80 near the root 70X. It is thus possible to state that the sealing reinforcement part 90 formed at a location closer to the root 70X more effectively improves the sealability between the lid 60 and the outer package film 50 as compared with the sealing reinforcement part 90 formed at a location further from the root 70X.

The sealing reinforcement part 90 is formed by a method, which will be described later. A material forming the sealing reinforcement part 90 includes, for example, at least one of a resin, a metal, a ceramic, and rubber. In addition, the material includes, for example, a mixture of at least two of a resin, a metal, a ceramic, and a rubber, and a composite of at least two of a resin, a metal, a ceramic, and a rubber. The composite includes, for example, one in which different materials are joined at a molecular level. Examples of the resin include at least one of thermoplastic resins, photocurable resins, room-temperature curable resins, thermosetting resins, and electron beam curable resins (hereinafter, these resins may be collectively referred to as "curable resins). Examples of the thermoplastic resins include polyester-based resins such as polyethylene terephthalate-based resins and polybutylene terephthalate-based resins, polyolefin-based resins such as polyethylene-based resins and polypropylene-based resins, cyclic polyolefin-based resins, or acid-modified polyolefin-based resins obtained by graft-modifying the polyolefin-based resin with an acid such as maleic anhydride. The photocurable resin is a resin that is cured in response to irradiation with light with a specific wavelength. Examples of the photocurable resin include a radical polymerization-type resin that causes radicalization of a photopolymerization initiator and is cured through a radical chain reaction between functional groups of monomer and oligomer and a cationic polymerization-type resin that starts a cationic polymerization reaction in response to irradiation with ultraviolet rays and is cured. Examples of the radical polymerization-type resin include an acrylic resin, and examples of the cationic polymerization-type resin include an epoxy resin and vinyl ether. Examples of the room temperature curable resin include a resin containing an epoxy resin, an ester resin, or an acrylic resin as a main material and cured by being mixed with a curing agent. Examples of the thermosetting resin include a phenol resin, an epoxy resin, a melamine resin, a urea resin, an unsaturated polyester resin, an alkyd resin, a silicone resin, polyurethane, and a thermosetting polyimide. Examples of the electron beam curable resin include an acrylic resin.

### <1-2. Method for manufacturing electrical storage device>

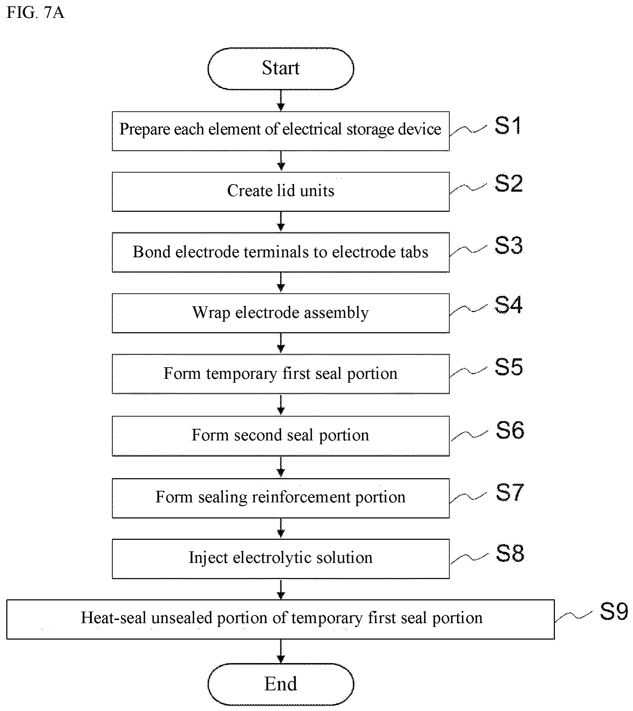

Fig. 7A is a flowchart illustrating an example of a method for manufacturing the electrical storage device 10. Hereinafter, the method for manufacturing the electrical storage device 10 according to the first embodiment will be described. However, the order of executing Steps S1 to S8 below is not limited to the following order and can be appropriately changed.

In Step S1, each element of the electrical storage device 10 is prepared. Specifically, the electrode assembly 20, the pair of electrode terminals 30, the outer package film 50, and the pair of lids 60 are prepared.

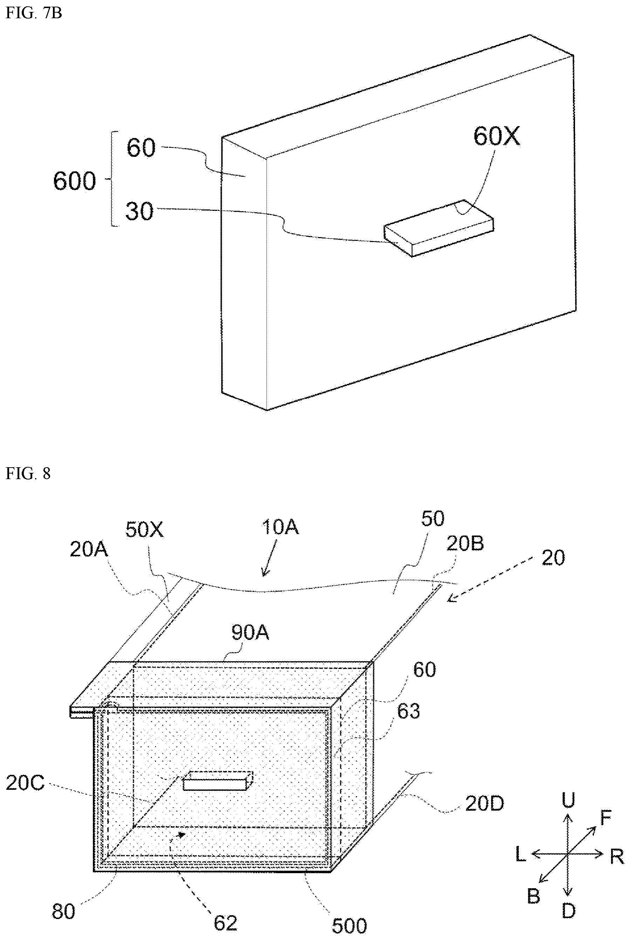

In Step S2, each electrode terminal 30 is joined to each lid 60. In the present embodiment, each electrode terminal 30 is joined to the lid 60 to protrude on the side of the second surface 62 via the through-hole 60X. Here, the gap between the peripheral surface of the electrode terminal 30 and the inner wall surface of the through-hole 60X of the lid 60 may be filled with a resin. Each lid unit 600 (see Fig. 7B) in which the electrode terminal 30 is joined to the lid 60 is created by completing Step S2.

In Step S3, the lid units 600 are disposed to face the front surface 21 and the back surface 22 of the electrode assembly 20, and the electrode terminals 30 and the electrode assembly 20 are joined.

Alternatively, the method for manufacturing the electrical storage device 10 may include a step of joining the electrode assembly 20 to the electrode terminals 30 first and then joining the lids 60 to the electrode terminals 30 joined to the electrode assembly 20, instead of Steps S2 and S3. In this example, the electrode terminals 30 may protrude from between an arbitrary surface of the sealing surfaces 63A to 63D and the outer package film 50 to the outside of the outer packaging 40.

In Step S4, the electrode assembly 20 is wrapped by the outer package film 50 to form the pair of opening parts 40A. The method for wrapping the electrode assembly 20 is not particularly limited, and the outer package film 50 may be wound around the electrode assembly 20 and the lids 60, for example. At this time, the parts of the outer package film 50 located at the peripheral edge parts of the opening parts 40A serve as the first sealing regions 500. In this manner, the first sealing regions 500 face the lid sealing portions 63 of the pair of lids 60.

In Step S5, a first seal portion 70, a part of which is an unsealed portion (hereinafter, referred to as a "temporary first seal portion") is formed by heat-sealing the facing heat-sealable resin layers 53 of the outer package film 50. Note that the unsealed portion can be formed by using, for example, a sealing bar having a shape with which the sealing bar partially does not come into contact with the outer package film 50. In another example, the unsealed portion can be formed by interposing a fluororesin film or the like between mutually facing surfaces (heat-sealable resin layers 53) of the outer package film 50. By forming the temporary first seal portion before formation of the second seal portion 80, the electrode assembly 20 can be held by the outer package film 50, so that the location of the electrode assembly 20 is unlikely to shift with respect to the outer package film 50. This suppresses generation of wrinkles during formation of the second seal portion 80.

In Step S6, the second seal portion 80 is formed. The second seal portion 80 is formed by heat-sealing the heat-sealable resin layer 53 of the first sealing region 500 of the outer package film 50 and the lid sealing portion 63 of the lid 60. Note that Step S6 may be executed earlier than Step S5.

In Step S7, the sealing reinforcement parts 90 are formed. More specifically, a material forming the sealing reinforcement parts 90 is injected into parts between the first sealing regions 500 and the lid sealing portions 63 where the second seal portions 80 are not formed (unsealed portions of the second seal portions 80) in Step S6. The parts where the second seal portions 80 are not formed are specified by a leakage test, for example. Examples of a method for injecting the material forming the sealing reinforcement parts 90 include a method of injecting the material in a fluid state into the unsealed portions of the second seal portions 80 by a nozzle or the like and then solidifying the material. Alternatively, a method of pushing the material in the fluid state into the unsealed portions of the second seal portions 80 by pressure is exemplified. In this manner, the sealing reinforcement parts 90 are formed at the unsealed portions of the second seal portions 80.

In Step S8, an electrolytic solution is injected from an unsealed portion of the temporary first seal portion, and aging and degassing are executed. Note that in a case where the electrical storage device 10 is an all-solid-state battery, the process of injecting the electrolytic solution from the unsealed portion of the temporary first seal portion is omitted.

In Step S9, the first seal portion 70 is formed by heat-sealing the unsealed portion of the temporary first seal portion after the outer package film 50 is vacuumed as needed.

### <1-3. Action and effect of electrical storage device>

According to the electrical storage device 10, even if the second seal portions 80 are not formed between the outer package film 50 and the lids 60, and unsealed portions are generated in the second seal portions 80, the parts are compensated for by the sealing reinforcement part 90. It is thus possible to more reliably seal the outer package film 50 and the lid 60.

### [2. Second embodiment]

An electrical storage device 10A of a second embodiment is different from that of the first embodiment in a configuration and a formation method of sealing reinforcement part 90A, and the other configurations are similar to those in the first embodiment. Hereinafter, differences of the electrical storage device 10A of the second embodiment from those in the first embodiment will be mainly described.

### <2-1. Configuration of electrical storage device>

Fig. 8 is a perspective view illustrating a configuration of a periphery of each lid 60 of the electrical storage device 10A of the second embodiment (however, illustration of the electrode terminals 30 is omitted). As illustrated in Fig. 8, each sealing reinforcement part 90A (the hatched part in Fig. 8) covers an entire first sealing region 500 and second sealing region (a lid sealing portion 63 of a lid 60) from the outside of an outer package film 50 and further covers an entire second surface 62 of the lid 60, in the electrical storage device 10A. Preferably, the sealing reinforcement part 90A extends in the FB direction of the electrical storage device 10A and reaches the position where corners 230 of an electrode assembly 20 are present on an outer surface of the outer package film 50. In other words, the sealing reinforcement part 90A preferably covers at least one of the plurality of corners 230 of the electrode assembly 20 from the outside of the outer package film 50. Note that although Fig. 8 illustrates only the configuration of the periphery of one of the lids 60, the configuration of the periphery of the other lid 60 is similar.

Note that in the example illustrated in Fig. 8, the sealing reinforcement part 90A is formed to a range reaching a part of a bulging portion 50X. In the case where the sealing reinforcement part 90A is formed to reach at least a part of the bulging portion 50X in this manner, the sealing reinforcement part 90A can also reinforce the bulging portion 50X, particularly, the root thereof. However, the sealing reinforcement part 90A may be formed at a location except for the bulging portion 50X.

As a material for forming the sealing reinforcement part 90A, a material similar to the material forming the sealing reinforcement part 90 can be used.

### <2-2. Method for manufacturing electrical storage device>

A method for manufacturing the electrical storage device 10A according to the second embodiment is different from the method for manufacturing the electrical storage device 10 in a method for forming the sealing reinforcement parts 90. In other words, the method for manufacturing the electrical storage device 10A is different from the method for manufacturing an electrical storage device 10 in specific content of Step S7. Hereinafter, description will be made.

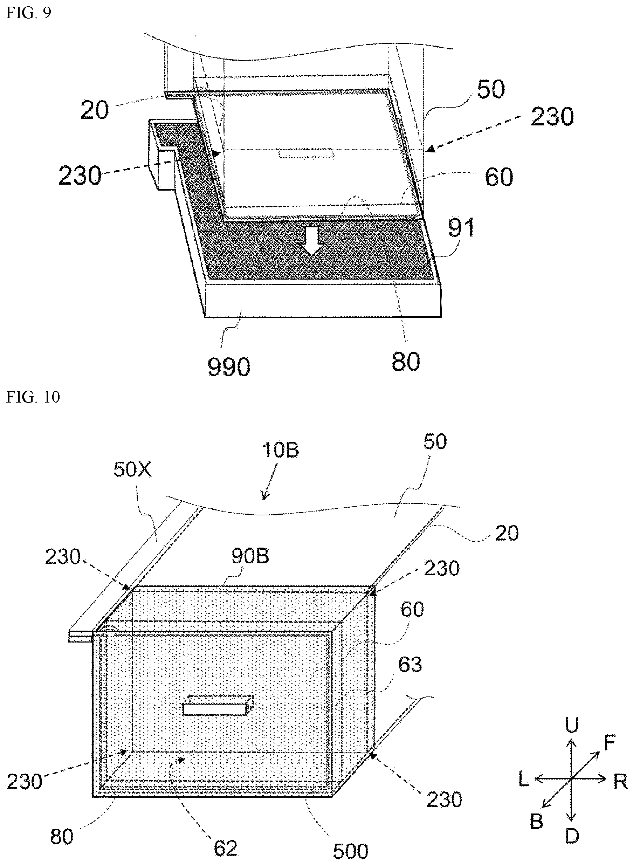

Fig. 9 is a diagram for explaining a method for forming the sealing reinforcement part 90A illustrated in Fig. 8. A container 990 illustrated in Fig. 9 is a container capable of accommodating the lid 60 and the periphery thereof and can be a container made of a silicone resin, for example, and having flexibility. First, the lid 60 and the periphery thereof on one side in the electrical storage device 10A assembled in the processes up to Step S6 are accommodated in the container 990, a material 91 (in a fluid state) for forming the sealing reinforcement part 90A is poured thereinto, and the lid 60 including the entire first sealing region 500 and the entire second sealing region (lid sealing portion 63) is impregnated with the material 91. Subsequently, the material 91 is solidified, the lid 60 and the like are then put out from the container 990, and the excessive material 91 is removed. According to this method, the first sealing region 500 and the lid sealing portion 63 including the unsealed portion of the second seal portion 80 are covered by the sealing reinforcement part 90A from the outside. It is possible to form the sealing reinforcement part 90A to cover at least one of the corners 230 from the outside of the outer package film 50 by setting the depth of the container 990 to be longer than the distance from the second surface 62 of the lid 60 to the front surface 21 or the back surface 22 of the electrode assembly 20 facing the second surface 62.

Note that a slit (not illustrated) through which the electrode terminal 30 penetrates may be formed in a bottom surface portion of the container 990. In this case, it is possible to avoid the electrode terminal 30 from being covered by the material 91 by causing the end part of the electrode terminal 30 to protrude from the slit to the outside of the bottom surface portion of the container 990 and bringing the electrode terminal 30 into close contact with a slit peripheral edge when the lid 60 and the periphery thereof are accommodated in the container 990.

### <2-3. Action and effect of electrical storage device>

According to the electrical storage device 10A of the second embodiment, even if the second seal portion 80 is not formed between the outer package film 50 and the lid 60, and an unsealed portion is generated, the part is covered by the sealing reinforcement part 90A. It is thus possible to more reliably seal the outer package film 50 and the lid 60. Furthermore, in a case where the sealing reinforcement part 90A reaches the bulging portion 50X, it is possible to reinforce the bulging portion 50X. Also, in a case where the sealing reinforcement part 90A covers at least one of the corners 230 of the electrode assembly 20 from the outside of the outer package film 50, it is possible to suppress the corners 230 breaking through the outer package film 50 and protruding therefrom.

In a case where the sealing reinforcement part 90A extends on an outer lateral surface of the outer package film 50 to cover at least one of the corners 230 of the electrode assembly 20, it is possible to impart an incidental function of suppressing deformation of the outer packaging 40 to the sealing reinforcement part 90A by forming the sealing reinforcement part 90A by a material having relatively low stretchability and deformability. In the electrical storage device 10A, the internal pressure of the electrical storage device 10A may rise due to a change in volumes of the positive active material and the negative active material of the electrode assembly 20 with charging and discharging, generation of gas, and the like. In a case where the internal pressure of the electrical storage device 10A rises, the outer packaging 40 may expand. In a case where vacuuming is performed in the process of manufacturing the electrical storage device 10B, the outer packaging 40 may contract. The sealing reinforcement part 90A extends on the outer lateral surface of the outer package film 50 to thereby reinforce the outer package film at least at the part, and it is thus possible to limit the above deformation of the outer packaging 40.

### [3. Third embodiment]

An electrical storage device 10B of a third embodiment is different from that of the first embodiment in a configuration and a formation method of sealing reinforcement part 90B, and the other configurations are similar to those in the first embodiment. Hereinafter, differences of the electrical storage device 10B of the third embodiment from that in the first embodiment will be mainly described.

### <3-1. Configuration of electrical storage device>

Fig. 10 is a perspective view illustrating a configuration of a periphery of each lid 60 of the electrical storage device 10B of the third embodiment (however, illustration of the electrode terminals 30 is omitted). As illustrated in Fig. 10, each sealing reinforcement part 90B (the hatched part in Fig. 10) covers an entire first sealing region 500 and an entire second sealing region (a lid sealing portion 63 of a lid 60) from the outside of an outer package film 50 and further covers an entire second surface 62 of the lid 60, in the electrical storage device 10B. Preferably, the sealing reinforcement part 90B extends in the FB direction of the electrical storage device 10B and reaches the position where corners 230 of an electrode assembly 20 are present on an outer surface of the outer package film 50. In other words, the sealing reinforcement part 90B preferably covers at least one of the plurality of corners 230 of the electrode assembly 20 from the outside of the outer package film 50. Note that although Fig. 10 illustrates only the configuration of the periphery of one of the lids 60, the configuration of the periphery of the other lid 60 is similar.

The sealing reinforcement part 90B is formed by disposing a reinforcing member constituted as a member separated from the outer package film 50 outside the outer package film 50 and the lid 60, unlike the sealing reinforcement part 90A. A material forming the sealing reinforcement part 90B may include, for example, a resin, metal, rubber, a metal oxide, a compound of a metal oxide and a resin, a carbon fiber reinforced plastic, and the like. In a case where the electrode assembly 20 includes an electrolytic solution, the sealing reinforcement part 90B is preferably formed to include a material that does not allow the electrolytic solution to be transmitted therethrough or a material having resistance against the electrolytic solution. Also, the sealing reinforcement part 90B is preferably formed to include a material that does not allow gas and moisture to be transmitted therethrough or is preferably formed to include a layer that does not allow gas and moisture to be transmitted therethrough.

The shape and the thickness of the sealing reinforcement part 90B are not particularly limited. The sealing reinforcement part 90B may be molded into a sheet shape, for example. In this case, it is possible to join a plurality of sealing reinforcement parts 90B, for example, to outside of the lid 60 and the outer package film 50. The sheet-shaped sealing reinforcement part 90B may be formed of a resin film, for example. The resin film may be a single-layer film or a multi-layer film. Furthermore, the sealing reinforcement part 90B may be molded into a cap shape with which the sealing reinforcement part 90B can be put on the end part of the outer packaging 40 from the outside of the lid 60. The cap-shaped sealing reinforcement part 90B can be formed of, for example, rubber, a molded article of a resin, ceramic, metal, a resin film (including a cold molded article), or the like. In this manner, the entire sealing reinforcement part 90B may be formed of one part or may be formed of two or more parts formed of the same material or different materials. Furthermore, the thickness of the sealing reinforcement part 90B covering the outer package film 50 and the lids 60 is not particularly limited.

The sealing reinforcement part 90B may not be or may be joined to the outer packaging 40 (at least one of the lid 60 and the outer package film 50). In a case where the sealing reinforcement part 90B includes an elastic material such as rubber and is formed into a cap shape, for example, it is possible to attach the sealing reinforcement part 90B alone to the end part of the outer packaging 40 by using elasticity of the sealing reinforcement part 90B. On the other hand, in a case where the sealing reinforcement part 90B is joined to the outer packaging 40, the joining method is not particularly limited. Examples of the joining method include a method of interposing an adhesive between the sealing reinforcement part 90B and the outer packaging 40, a method of pouring the above-mentioned curable resin between the sealing reinforcement part 90B and the outer packaging 40 and curing the curable resin, and a method of fusing the sealing reinforcement part 90B and the outer packaging 40 with a heat-sealable resin. In other words, the sealing reinforcement part 90B can also be combined with the sealing reinforcement part 90 of the first embodiment or the sealing reinforcement part 90A of the second embodiment.

Note that in the example illustrated in Fig. 10, the sealing reinforcement part 90B is formed at the part except for the bulging portion 50X. However, the sealing reinforcement part 90B may be formed up to a range reaching at least a part of the bulging portion 50X. In the case where the sealing reinforcement part 90B is formed to reach at least a part of the bulging portion 50X in this manner, the sealing reinforcement part 90B can also reinforce the bulging portion 50X, particularly, the root thereof.

### <3-2. Action and effect of electrical storage device>

According to the electrical storage device 10B of the third embodiment, even if the second seal portion 80 is not formed between the outer package film 50 and the lid 60, and an unsealed portion is generated, the part is covered by the sealing reinforcement part 90B. It is thus possible to more reliably seal the outer package film 50 and the lid 60. Furthermore, in a case where the sealing reinforcement part 90B reaches the bulging portion 50X, it is possible to reinforce the bulging portion 50X. Also, in a case where the sealing reinforcement part 90B covers at least one of the corners 230 of the electrode assembly 20 from the outside of the outer package film 50, it is possible to suppress the corners 230 breaking through the outer package film 50 and protruding therefrom.

In addition, it is also possible to impart an incidental function of suppressing deformation of the outer packaging 40 to the sealing reinforcement part 90B by forming the sealing reinforcement part 90B by a material having relatively low stretchability and deformability. In the electrical storage device 10B, the internal pressure of the electrical storage device 10B may rise due to a change in volumes of the positive active material and the negative active material of the electrode assembly 20 with charging and discharging, generation of gas, and the like. In a case where the internal pressure of the electrical storage device 10B rises, the outer packaging 40 may expand. However, it is possible to limit the expansion of the outer packaging 40 by the sealing reinforcement part 90B with relatively low stretchability and deformability being present outside the outer package film 50. In a case where vacuuming is performed in the process of manufacturing the electrical storage device 10B, the outer packaging 40 may contract. In a case where the sealing reinforcement part 90B is at least partially joined to the outer package film 50, the sealing reinforcement part 90B reinforces the outer package film 50 at the part, and it is thus possible to limit the contraction of the outer packaging 40.

### [4. Fourth embodiment]

An electrical storage device 10C of a fourth embodiment is different from that of the third embodiment in that a sealing reinforcement part 90C covers at least one of ridge line portions 20A to 20D from outside of an outer packaging 40, and the other configurations are similar to those in the third embodiment. Hereinafter, differences of the electrical storage device 10C of the fourth embodiment from that of the third embodiment will be mainly described.

### <4-1. Configuration of electrical storage device>

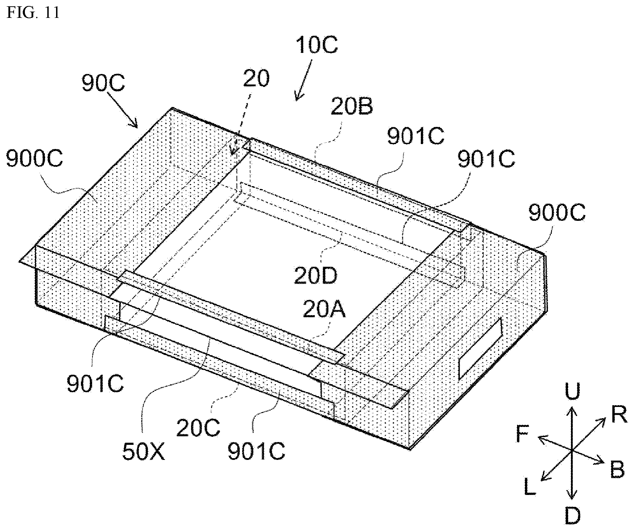

Fig. 11 is a perspective view illustrating a schematic configuration of the electrical storage device 10C (however, illustration of electrode terminals 30 is omitted). As illustrated in Fig. 11, the sealing reinforcement part 90C includes two both-end reinforcement parts 900C that cover both end parts of the outer packaging 40 in the FB direction in the electrical storage device 10C. In addition to this, the electrical storage device 10C of the fourth embodiment further includes four ridge line reinforcement parts 901C that cover ridge line portions 20A to 20D of the electrode assembly 20 from the outside of the outer packaging 40. In other words, the both-end reinforcement parts 900C cover an entire first sealing region 500 and second sealing region (a lid sealing portion 63 of a lid 60) from the outside of the outer package film 50 and further cover an entire second surface 62 of the lid 60. The ridge line reinforcement parts 901C cover at least some of the ridge line portions 20A to 20D of the electrode assembly 20, respectively, from the outside of the outer packaging 40. In the present embodiment, each of the ridge line reinforcement parts 901C is coupled to each of the both-end reinforcement parts 900C. As materials constituting the both-end reinforcement parts 900C and the ridge line reinforcement parts 901C, it is possible to use similar materials exemplified in the description of the sealing reinforcement part 90B of the third embodiment.

It is preferable that each of the ridge line reinforcement parts 901C be formed to have an L shape when viewed in the FB direction so as to extend over two surfaces forming the ridge line portions 20A to 20D. However, the ridge line reinforcement parts 901C may be formed only on one surface side of the bulging portion 50X at the part corresponding to the bulging portion 50X. The ridge line reinforcement parts 901C may be formed integrally with the both-end reinforcement parts 900C, or may be formed separately from the both-end reinforcement parts 900C and joined to at least either the outer surface of the outer packaging 40 or the both-end reinforcement parts 900C. In a case where the both-end reinforcement parts 900C and the ridge line reinforcement parts 901C are integrally formed of a flexible material, for example, it is possible to manufacture the electrical storage device 10C including the sealing reinforcement part 90C by fitting the outer packaging 40 with the electrode assembly 20 sealed therein inside a space defined by the both-end reinforcement parts 900C and the ridge line reinforcement parts 901C. In a case where each of the both-end reinforcement parts 900C and the ridge line reinforcement parts 901C is formed as a separate member, the both-end reinforcement parts 900C and the ridge line reinforcement parts 901C may be combined in advance, and the outer packaging 40 with the electrode assembly 20 sealed therein may be fitted into the space defined by the both-end reinforcement parts 900C and the ridge line reinforcement parts 901C. Alternatively, each of the both-end reinforcement parts 900C and the ridge line reinforcement parts 901C may be attached to the outer packaging 40 and may then be coupled thereto. Examples of a method of coupling the both-end reinforcement parts 900C and the ridge line reinforcement parts 901 C include a method of inserting projecting portions formed on either the both-end reinforcement parts 900C or the ridge line reinforcement parts 901C into recessed portions formed in the others, fixedly bonding the both with an adhesive, and a method of fusing the both with a heat-sealable resin. Alternatively, each of the both-end reinforcement parts 900C and the ridge line reinforcement parts 901C may be simply joined to the outer packaging 40. The method of joining them to the outer packaging 40 is as described above in the second embodiment.

Preferably, the both-end reinforcement parts 900C extend in the FB direction of the electrical storage device 10B and reach to the position where corners 230 of the electrode assembly 20 are present on the outer surface of the outer package film 50 similarly to the second embodiment. In other words, the both-end reinforcement parts 900C preferably cover at least one of the plurality of corners 230 of the electrode assembly 20 from the outside of the outer package film 50. However, the both-end reinforcement parts 900C may not reach the positions where the corners 230 of the electrode assembly 20 are present, and the ridge line reinforcement parts 901C may cover at least one of the corners 230 of the electrode assembly 20 from the outside of the outer package film 50.

### <4-2. Action and effect of electrical storage device>

According to the electrical storage device 10C of the fourth embodiment, even if the second seal portion 80 is not formed between the outer package film 50 and the lid 60, and an unsealed portion is generated, the part is covered by the both-end reinforcement parts 900C. It is thus possible to more reliably seal the outer package film 50 and the lid 60. Furthermore, in a case where at least either the both-end reinforcement parts 900C or the ridge line reinforcement parts 901C reach the bulging portion 50X, it is possible to reinforce the bulging portion 50X. Also, in a case where at least either the both-end reinforcement parts 900C or the ridge line reinforcement parts 901C cover at least one of the corners 230 of the electrode assembly 20 from the outside of the outer package film 50, it is possible to suppress the corners 230 breaking through the outer package film 50 and protruding therefrom. Furthermore, since the ridge line reinforcement parts 901C cover the parts of the ridge line portions 20A to 20D of the electrode assembly 20 that are not covered by the both-end reinforcement parts 900C from the outside of the outer package film 50, it is possible to suppress the ridge line portions 20A to 20D of the electrode assembly 20 breaking through the outer package film 50 and protruding therefrom. Note that the ridge line reinforcement parts 901C may not be formed to correspond to all the ridge lines of the ridge line portions 20A to 20D, and it is possible to achieve the above effect merely by one ridge line reinforcement part 901C being formed to correspond to one of the ridge line portions.

Furthermore, in a case where at least either the both-end reinforcement parts 900C or the ridge line reinforcement parts 901C are formed of an elastic material, the sealing reinforcement part 90C can be deformed to follow expansion and contraction of the outer packaging 40 that may occur when the electrical storage device 10C is manufactured or used. More specifically, the internal pressure of the electrical storage device 10C may rise due to a change in volumes of the positive active material and the negative active material of the electrode assembly 20 with charging and discharging, generation of gas, and the like in the electrical storage device 10C. If the internal pressure of the electrical storage device 10C rises, the outer packaging 40 may expand, and the outer package film 50 may extend. Also, in a case where vacuuming is performed in the process of manufacturing the electrical storage device 10C, the outer package film 50 may be deformed due to contraction of the outer packaging 40. If the sealing reinforcement part 90C can follow such deformation of the outer packaging 40, the sealing reinforcement part 90C is unlikely to be separated from the outer package film 50. Therefore, the sealing reinforcement part 90C can more reliably exhibit the above effect.

On the other hand, in a case where the both-end reinforcement parts 900C and the ridge line reinforcement parts 901C are formed of materials having relatively low stretchability and deformability, the sealing reinforcement part 90C exhibits an incidental effect of suppressing deformation of the outer packaging 40. Specifically, it is possible to limit the expansion of the outer packaging 40 by the sealing reinforcement part 90C with relatively low stretchability and deformability being present outside the outer package film 50. In a case where the sealing reinforcement part 90C is at least partially joined to the outer package film 50, the sealing reinforcement part 90C reinforces the outer package film 50 at the part, and it is thus possible to limit the contraction of the outer packaging 40.

### [5. Modifications]

The above-described embodiments are an example of possible forms of an electrical storage device, and a method for manufacturing an electrical storage device according to the present invention, and are not intended to limit the forms thereof. The electrical storage device, and the method for manufacturing an electrical storage device according to the present invention may have a form different from that exemplified in each of the embodiments. An example thereof is a form in which a part of the configuration of any of the embodiments is replaced, changed or omitted, or a form in which a new configuration is added to any of the embodiments. Some examples of modifications of the embodiments will be described below. Note that the above embodiments and the following modifications can be combined as long as they are not technically contradictory.

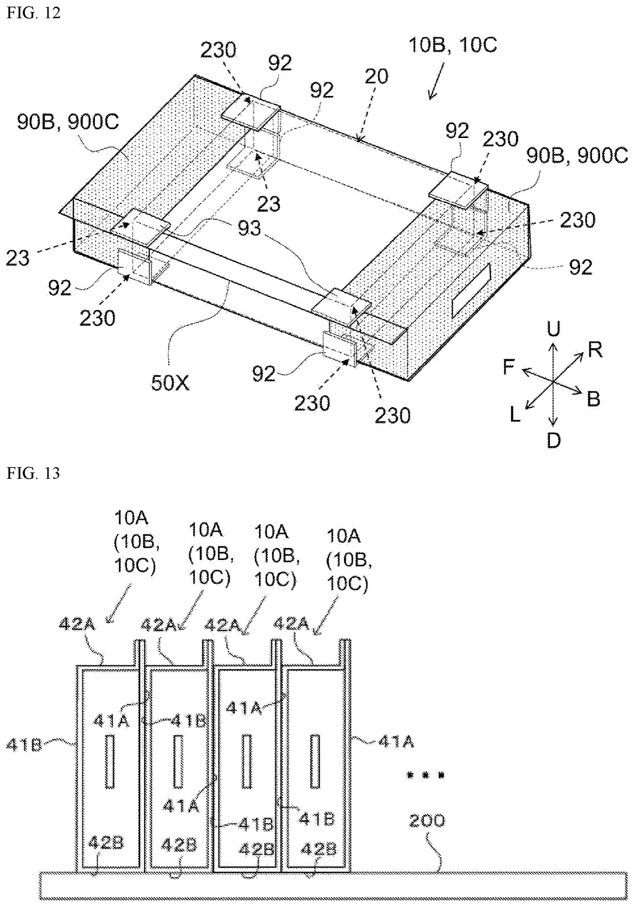

(1) In the electrical storage device 10A of the second embodiment, the sealing reinforcement part 90A may not cover the entire first sealing region 500 and the entire lid sealing portion 63 and may at least partially cover each of the first sealing region 500 and the lid sealing portion 63. More specifically, the effect of reinforcing the sealing achieved by the second seal portion 80 is achieved as long as the sealing reinforcement part 90A covers the peripheral edge part 5000 that is a peripheral edge of the opening part 40A (see Fig. 4) in the outer package film 50 and the part of the lid sealing portion 63 facing the peripheral edge part 5000. In other words, the sealing reinforcement part 90A may not cover the entire first sealing region 500 and the entire lid sealing portion 63 in the FB direction of the electrical storage device 10. Furthermore, the sealing reinforcement part 90A may not cover the peripheral edge part 5000 and the part of the lid sealing portion 63 facing the peripheral edge part 5000 over the entire circumferential direction of the opening part 40A. The same applies to the sealing reinforcement part 90B of the third embodiment and the sealing reinforcement part 90C of the fourth embodiment. Furthermore, the sealing reinforcement parts 90A to 90C may not cover the entire second surfaces 62 of the lids 60 in the electrical storage devices 10A to 10C of the second to fourth embodiments. In other words, the sealing reinforcement parts 90A to 90C may not be formed at the centers of the lids 60 as long as the sealing reinforcement parts 90A to 90C are formed to cover the boundaries between the outer package films 50 (first sealing regions 500) and the lids 60 (lid sealing portions 63) in the FB direction. Furthermore, each of the sealing reinforcement parts 90A to 90C may be formed to simply cover at least one vertex (boundaries 64 to 67) of the lid 60 and the periphery thereof. This is because the unsealed portion of the second seal portion 80 is particularly likely to occur at vertexes of the lid 60.
(2) The method for manufacturing the electrical storage device of the second embodiment is not limited to the one in the above embodiment. For example, in the step of forming the sealing reinforcement part 90A, the container 990 may be filled with the material 91 in the fluid state first, at least a part of the first sealing region 500 and at least a part of the second sealing region may be impregnated with the material 91, with which the container is filled, and may then be taken out, and the material 91 may then be solidified.
(3) In the electrical storage device 10B of the third embodiment and the electrical storage device 10C of the fourth embodiment, the sealing reinforcement part 90B and the both-end reinforcement parts 900C may further include buffering materials to protect the corners 230 of the electrode assembly 20. Fig. 12 is a diagram illustrating a configuration example of the buffering materials. In the example of Fig. 12, the buffering material 92 is formed into an L shape when viewed in the FB direction and covers a corner 230 in the UD direction and the LR direction. The buffering material 93 is formed into a plate shape when viewed in the UD direction and is disposed on the upper surface of the bulging portion 50X (the surface on the side of the first surface 41 of the outer packaging 40), for example. Each of the buffering materials 92 and 93 is fixed to the outside of the sealing reinforcement part 90B and the both-end reinforcement parts 900C, respectively, covers the corner 230 of the electrode assembly 20, and alleviates an impact imparted from the outside to the outer package film 50. Therefore, the buffering materials 92 and 93 are preferably formed of an elastic material such as rubber or elastomer, for example.

Note that even in the aforementioned case, the sealing reinforcement part 90B and the both-end reinforcement parts 900C may not reach the corners 230 and the buffering material 92 or 93 may cover the corner 230 as described above. In addition to or instead of the form of Fig. 12, the buffering material 92 may be fixed to the sealing reinforcement part 90B or the both-end reinforcement parts 900C to follow the lower surface of the bulging portion 50X and the second surface 42 of the outer packaging 40. In addition to or instead of the form of Fig. 12, the buffering material 93 may be fixed to the sealing reinforcement part 90B or the both-end reinforcement parts 900C to follow the lower surface of the bulging portion 50X. Furthermore, the buffering material 92 or 93 may be fixed to the inside (the part closer to the outer package film 50) of the sealing reinforcement part 90B or the both-end reinforcement part 900C instead of the outside of the sealing reinforcement part 90B or the both-end reinforcement parts 900C.
(4) In the electrical storage devices 10, 10A to 10C of the first to fourth embodiments, the outer shape of the outer packaging 40 can be arbitrarily changed. For example, the lid 60 may not have a substantially rectangular shape when viewed in the FB direction of the electrical storage device 10, and may have another substantially polygonal shape, or may have a shape other than the substantially polygonal shape, such as a substantially circular shape or a substantially oval shape, for example. The shape of the lid 60 may be changed in accordance with, for example, the three-dimensional shape of the electrode assembly 20.
(5) In the electrical storage devices 10 and 10A to 10C in the first to fourth embodiments, adhesive films (not illustrated) may be joined to the outer circumferential surfaces of the electrode terminals 30. The adhesive film can be arbitrarily selected as long as it is a film capable of bonding the electrode terminal 30 formed of a metal and the lid 60 formed of a resin. For the adhesive films, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive films can be films having a single layer or two or more layers of any of the above-mentioned resins.
(6) In Step S4 of the above-mentioned manufacturing method, the outer package film 50 may be formed into a tubular member with the opening parts 40A in advance, and the electrode assembly 20 and the lids 60 may be disposed in the tubular member. This is commonly applicable to the electrical storage devices 10 and 10A to 10C according to the first to fourth embodiments.
(7) The electrical storage device 10B including the cap-shaped reinforcing member of the third embodiment can be manufactured by changing the method for manufacturing the electrical storage device 10 of the first embodiment, for example, as follows. In Step S1, a pair of reinforcing members that can be attached to the lids 60 are prepared along with the electrode assembly 20, the pair of electrode terminals 30, the outer package film 50, and the pair of lids 60. In Step S8, each reinforcing member is attached to each lid 60 to thereby form the sealing reinforcement part 90B. Note that the preparation of the reinforcing members may be performed at a timing different from Step S1 as long as they are prepared before Step S8.
(8) In a case where the sealing reinforcement parts 90A to 90C of the second to fourth embodiments have the aforementioned function of suppressing deformation of the outer packagings 40, the sealing reinforcement parts 90A to 90C may be configured to intensively suppress deformation of specific surfaces of the outer packaging 4 in accordance with modes at the time of using the electrical storage devices 10A to 10C. The electrical storage devices 10A to 10C are used such that one side (hereinafter, this will be referred to as a second surface 42B, while the other second surface 42 will be referred to as a second surface 42A) of the second surfaces 42 of each of the plurality of electrical storage devices 10A to 10C is in contact with a cooling mechanism 200 as illustrated in Fig. 13, for example. In the electrical storage devices 10A to 10C disposed as in Fig. 13, each second surface 42B is in contact with the cooling mechanism 200, and the first surface 41A is in direct contact with the first surface 41B of each of the adjacent electrical storage devices 10A to 10C or is in indirect contact therewith via a plate-shaped member, a buffering material, or the like (note that one of the first surfaces 41 will be referred to as a first surface 41A, while the other will be referred to as a first surface 41B). Therefore, in a case where expansion is considered as a mode of deformation of the outer packaging 40, for example, the first surfaces 41A, the first surface 41B, and the second surface 42B of the outer packaging 40 are relatively unlikely to expand even in a case where the internal pressures of the electrical storage devices 10A to 10C rise, in the electrical storage devices 10A to 10C aligned as in Fig. 13.

On the other hand, since the second surface 42A of the outer packaging 40 is not in contact with other elements of the electrical storage devices 10A to 10C and the like, the second surface 42A is likely to expand in the case where the internal pressures of the electrical storage devices 10A to 10C rise. Therefore, it is possible to adopt a configuration to suppress expansion of the second surface 42A by disposing the sealing reinforcement parts 90A to 90C to extend in a wider area on the second surface 42A of the outer packaging 40 and joining the sealing reinforcement parts 90A to 90C to the outer surface of the outer package film 50 or the like. In this manner, the sealing reinforcement parts 90A to 90C can be configured to suppress expansion of a specific surface of the outer packaging 40. The above configuration is similarly adopted not only for the expansion of the outer packagings 40 but also for contraction thereof. Reference Signs List

10, 10A to 10C Electrical storage device
20 Electrode assembly
20A to 20D Ridge line portion
30 Electrode terminal
40 Outer packaging
40A Opening part
50 Outer package film
60 Lid
63 Sealing surface (second sealing region)
64 to 67 Boundary (vertex)
80 Second seal portion (sealing portion)
90, 90A to 90C Sealing reinforcement part
230 Corner
500 First sealing region

## Claims

1. An electrical storage device comprising:
an electrode assembly;
an outer package film that wraps the electrode assembly to form an opening part and includes a first sealing region;
a lid that is disposed at the opening part and includes a second sealing region facing the first sealing region;
a sealing portion that is formed between the first sealing region and the second sealing region and establishes at least partial sealing between the first sealing region and the second sealing region; and
a sealing reinforcement part that reinforces the sealing established by the sealing portion.

2. The electrical storage device according to claim 1, wherein a material forming the sealing reinforcement part includes at least one of a resin, a metal, a ceramic, and a rubber, a mixture of at least two of these, and a composite of at least two of these.

3. The electrical storage device according to claim 1 or 2, wherein the sealing reinforcement part is formed at a part between the first sealing region and the second sealing region where at least the sealing portion is not formed.

4. The electrical storage device according to claim 1 or 2, wherein the lid has a polygonal shape having vertexes in front view, and the sealing reinforcement part is formed to at least partially cover at least one of the vertexes of the polygonal shape of the lid from outside.

5. The electrical storage device according to claim 1 or 2, wherein the sealing reinforcement part covers at least a part of the first sealing region and at least a part of the second sealing region from outside of the outer package film and the lid.

6. The electrical storage device according to claim 1 or 2, wherein
the electrode assembly has a three-dimensional shape including a plurality of corners, and
the sealing reinforcement part covers at least one of the plurality of corners from outside of the outer package film.

7. The electrical storage device according to claim 6, wherein
the electrode assembly has a three-dimensional shape including two mutually intersecting surfaces and a ridge line portion formed by the two surfaces, and
the sealing reinforcement part covers the ridge line portion from the outside of the outer package film.

8. A method for manufacturing an electrical storage device comprising:
preparing an electrode assembly;
wrapping the electrode assembly by an outer package film including a first sealing region to form an opening part;
disposing a lid including second sealing region at the opening part such that the second sealing region faces the first sealing region;
forming a sealing portion between the first sealing region of the outer package film and the second sealing region of the lid, the sealing portion establishing at least partial sealing between the first sealing region and the second sealing region; and
forming a sealing reinforcement part at a part between the first sealing region and the second sealing region where at least the sealing portion is not formed, the sealing reinforcement part reinforcing the sealing portions.

9. A method for manufacturing an electrical storage device comprising:
preparing an electrode assembly;
wrapping the electrode assembly by an outer package film including a first sealing region to form an opening part;
disposing a lid including a second sealing region at the opening part such that the second sealing region faces the first sealing region;
forming a sealing portion between the first sealing region of the outer package film and the second sealing region of the lid, the sealing portion establishing at least partial sealing between the first sealing region and the second sealing region;
impregnating at least a part of the first sealing region and at least a part of the second sealing region with a material in a fluid state; and
solidifying the material in the fluid state to thereby form a sealing reinforcement part that reinforces the sealing portions.

10. A method for manufacturing an electrical storage device comprising:
preparing an electrode assembly;
wrapping the electrode assembly by an outer package film including a first sealing region to form an opening part;
disposing a lid including a second sealing region at the opening part such that the second sealing region faces the first sealing region;
forming a sealing portion between the first sealing region of the outer package film and the second sealing region of the lid, the sealing portion establishing at least partial sealing between the first sealing region and the second sealing region;
preparing a reinforcement member that is configured to be attachable to the lid and covers at least a part of the first sealing region and at least a part of the second sealing region from outside of the lid; and
attaching the reinforcement member to the lid to thereby form a sealing reinforcement part that reinforces the sealing portion.
